# EUROPEAN PATENT SPECIFICATION

(11) **EP 4 239 768 B1**
(45) Date of publication and mention of the grant of the patent: **23.07.2025**
(21) Application number: 22804840.1
(22) Date of filing: 12.04.2022
(51) Int. Cl.: H01M 50/211, H01M 50/593, H01M 50/24

(54) **BATTERY MODULE WITH IMPROVED SAFETY**
BATTERIEMODUL MIT VERBESSERTER SICHERHEIT
MODULE BATTERIE AVEC UNE SÉCURITÉ AMÉLIORÉE

(30) Priority: 20.05.2021 KR 20210065127; 19.01.2022 KR 20220007727
(43) Date of publication of application: 06.09.2023
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); LEE, Bok-Gun, Daejeon 34122 (KR); JUNG, Hye-Mi, Daejeon 34122 (KR)
(74) Representative: Goddar, Heinz J.
(86) International application number: PCT/KR2022/005263
(87) International publication number: WO 2022/244985

(56) References cited:
- CN-A- 109 428 026
- CN-U- 212 136 508
- JP-B2- 5 598 442
- KR-A- 20150 127 863
- KR-A- 20150 138 198
- KR-A- 20200 106 378
- US-A1- 2018 309 175
- US-A1- 2021 013 465

## Description

### TECHNICAL FIELD

The present application claims priority to Korean Patent Application No. 10-2021-0065127 filed on May 20, 2021, and Korean Patent Application No. 10-2022-0007727 filed on January 19, 2022 in the Republic of Korea.

The present disclosure relates to a battery, and more particularly, to a battery module with improved safety even in a specific event situation such as thermal runaway, and a battery pack and a vehicle including the same.

### BACKGROUND ART

As the demand for portable electronic products such as laptops, video cameras and mobile phones has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on, among which the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses lithium-based oxides and carbon materials as a positive electrode active material and a negative electrode active material, respectively. The lithium secondary battery includes an electrode assembly with in which a positive electrode plate and a negative electrode plate respectively coated with the positive electrode active material and the negative electrode active material are disposed with a separator interposed therebetween, and an exterior, namely a battery case, for sealing the electrode assembly together with an electrolyte.

In general, the lithium secondary battery may be classified depending on the shape of the exterior into a can-type secondary battery in which the electrode assembly is included in a metal can and a pouch-type secondary battery in which the electrode assembly is included in a pouch of an aluminum laminate sheet.

Recently, secondary batteries have been widely used for driving or energy storage not only in small devices such as portable electronic devices, but also in medium and large devices such as electric vehicles and energy storage systems (ESS). A plurality of secondary batteries may be accommodated together in a module case in a state of being electrically connected to constitute one battery module. In this case, a plurality of battery cells (secondary batteries) may be provided in a dense state in a narrow space to increase energy density inside the battery module.

However, when the plurality of battery cells (secondary batteries) are concentrated in a narrow space, they may be vulnerable to accidents such as fire or explosion. In particular, when the temperature rises rapidly in one or some battery cells, an event such as thermal runaway propagation in which the temperature rise is propagated to other battery cells may occur. At this time, if such an event is not properly controlled, it may lead to a fire or explosion of the battery module, and may even cause serious human and property damage. Moreover, when a thermal event occurs in some battery cells, a venting gas, flame, spark, or the like may be ejected. In addition, when such a venting gas or flame is directed to neighboring normal cells, it kay cause thermal runaway or fire in the neighboring cells.

KR 10 2015 0 138 198 A describes a rechargeable battery comprising multiple battery cells interposed with frame elements designed to enhance mechanical load capability and electrical insulation, and to accommodate thickness changes and manufacturing tolerances. The frame elements are sandwiched between adjacent battery cells and are made of a foamed material such as polyurethane, silicone, epoxy or reaction injection molding foam which may be provided with self-extinguishing and / or fire-resistant additives.

US 2018/0309175 A1 describes a support assembly for holding battery cells within a battery array of an electrified vehicle. The support assembly includes a frame, a spacer, and a compressible insert that conforms to the geometries of the battery cells to provide secure support and reduce vibratory loads. The spacer is sandwiched between and thus separates adjacent battery cells extending within apertures and. The spacer is made of metal or metal alloy materials, such as aluminum, and a portion of the spacer may extend underneath a bottom portion outside of the frame and may contact a thermal exchange plate or a thermal interface material. The spacer thus serves as a thermal fin or cooling fin by removing thermal energy from the battery cells during certain conditions.

US 2021/013465 A1 describes a power storage module that includes a cell housing body which houses power storage cells and sheet-shaped elastic members to curb deformation due to cell expansion. The module may include a refrigerant flow path in a top plate of the cell housing body for cooling. The elastic member is disposed between groups of adjacent power storage cells and in contact with inner wall surfaces of the cell housing body. The elastic member absorbs expansion forces exerted by the power storage cells during charging and discharging, thereby maintaining a structural integrity of the module. To this end, the elastic member can be made from a foamed body of rubber or resin. Alternatively, it can be made from a structure body that swells when impregnated with a liquid, such as a swelling resin or a resin fiber aggregate, which can be a laminate of nonwoven fabric made from polyolefin-based resin or phenol resin fibers. Phenol resin fibers may improve a heat resistance of the elastic member.

### DISCLOSURE

### Technical Problem

The present disclosure is designed to solve the problems of the related art, and therefore the present disclosure is directed to providing a battery module configured to improve safety by effectively suppressing a thermal runaway event, and a battery pack and a vehicle including the same.

However, the technical problems to be solved by the present disclosure are not limited to the above, and other problems not mentioned herein will be clearly understood by those skilled in the art from the following disclosure.

### Technical Solution

The above technical problem is solved by the present invention by providing a battery module according to the independent claim
1. Advantageous modifications are laid out in the dependent claims.

### Advantageous Effects

According to an embodiment of the present disclosure, the thermal runaway propagation problem of the battery module may be effectively prevented.

Moreover, in the present disclosure, when a thermal event occurs in a specific battery cell to generate and eject a venting gas or flame, it is possible to suppress movement of the venting gas or flame to neighboring battery cells.

In particular, in a thermal runaway event propagation situation, the terrace portion of the cell where the electrode lead is located may be vulnerable to a chain reaction. However, according to an embodiment of the present disclosure, when a thermal runaway event occurs in the battery module, the terrace portions of neighboring battery cells may be more reliably protected from gas or flame. Therefore, the thermal chain reaction between battery cells may be blocked more effectively.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a configuration of a battery module according to an embodiment of the present disclosure.
FIG. 2 is a perspective view showing some components of the battery module of FIG. 1 separately.
FIG. 3 is a perspective view schematically showing a configuration of a battery cell included in the battery module an embodiment of the present disclosure.
FIG. 4 is a cross-sectional view schematically showing some components of the battery module according to an embodiment of the present disclosure.
FIG. 5 is an enlarged view showing a portion A2 of FIG. 4.
FIG. 6 is a cross-sectional view schematically showing some components of a battery module according to another embodiment of the present disclosure.
FIG. 7 is a cross-sectional view schematically showing some components of a battery module according to still another embodiment of the present disclosure.
FIG. 8 is a cross-sectional view schematically showing some components of a battery module according to still another embodiment of the present disclosure.
FIG. 9 is a cross-sectional view schematically showing some components of a battery module according to still another embodiment of the present disclosure.
FIG. 10 is a cross-sectional view schematically showing some components of a battery module according to still another embodiment of the present disclosure.
FIG. 11 is a cross-sectional view schematically showing some components of a battery module according to still another embodiment of the present disclosure.
FIG. 12 is a cross-sectional view schematically showing some components of a battery module according to still another embodiment of the present disclosure.
FIG. 13 is a cross-sectional view schematically showing some components of a battery module according to still another embodiment of the present disclosure.
FIG. 14 is a perspective view schematically showing a barrier member included in a battery module according to still another embodiment of the present disclosure.
FIG. 15 is a diagram showing that the barrier member and the battery cell of FIG. 14 are disposed adjacently.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, so it should be understood that other equivalents and modifications could be made thereto.

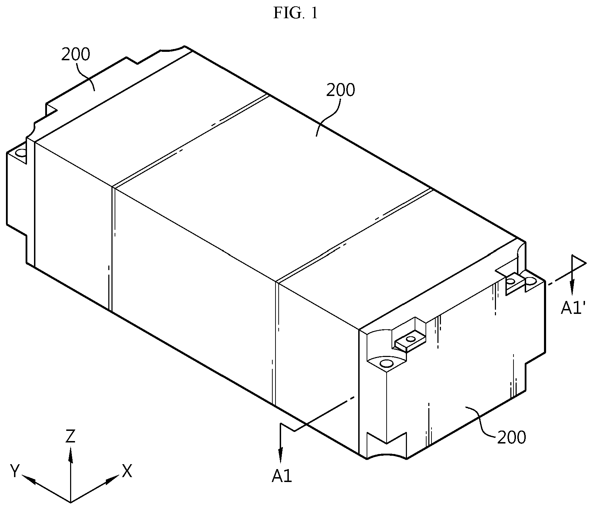

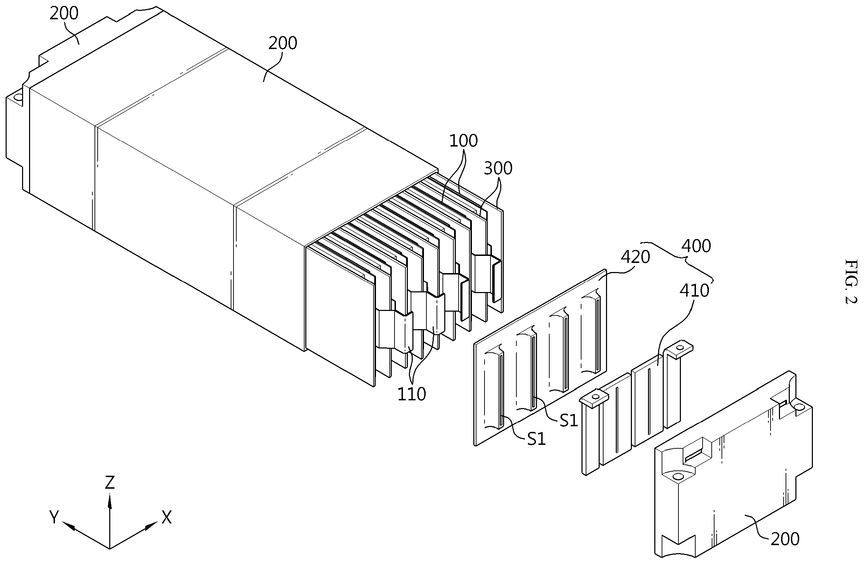

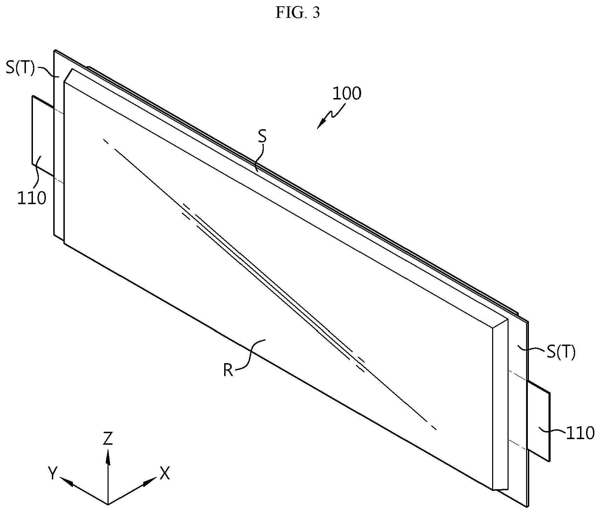

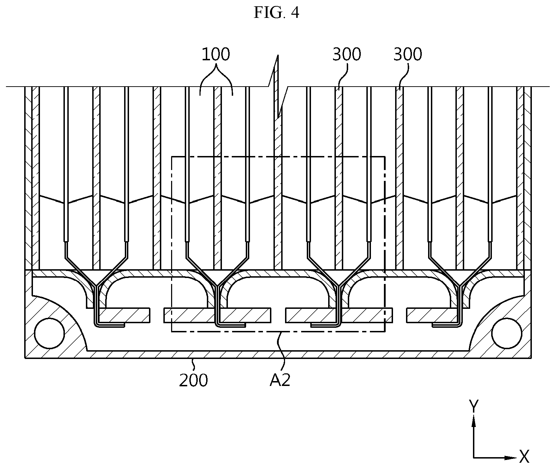

FIG. 1 is a perspective view schematically showing a configuration of a battery module according to an embodiment of the present disclosure. FIG. 2 is a perspective view showing some components of the battery module of FIG. 1 separately. FIG. 3 is a perspective view schematically showing a configuration of a battery cell included in the battery module an embodiment of the present disclosure. FIG. 4 is a cross-sectional view schematically showing some components of the battery module according to an embodiment of the present disclosure. For example, FIG. 4 may be regarded as showing an example of the cross-sectional structure, taken along the line A1-A1' of FIG. 1.

Referring to FIGS. 1 to 4, the battery module according to the present disclosure includes a pouch-type battery cell 100, a module case 200, and a barrier member 300.

The pouch-type battery cell 100 is a pouch-type secondary battery, which may include an electrode assembly, an electrolyte and a pouch exterior. Moreover, the pouch-type battery cell 100 may include an accommodation portion indicated by R and a sealing portion indicated by S, as shown in FIG. 3. Here, the accommodation portion R represents a portion where the electrode assembly and the electrolyte are accommodated, and the sealing portion S may represent a portion where the pouch exterior is fused in the form of surrounding the accommodation portion R.

In particular, it may be regarded that the pouch-type battery cell 100 has four sides (edges) around the accommodation portion R. In this case, all four sides may be sealed, or only three sides may be sealed. In this case, a cell in which four sides are sealed may be referred to as a four-sided sealing cell, and a cell in which three sides are sealed may be referred to as a three-sided sealing cell. For example, in the embodiment shown in FIG. 3, the battery cell 100 is configured in a standing-up form, where front ends, rear ends and upper ends of a left pouch and a right pouch may be sealed, and lower ends of the left pouch and the right pouch may not be sealed but folded in a state of being connected to each other. In this case, it may be regarded that the battery cell 100 is sealed on three sides.

A plurality of pouch-type battery cells 100 may be included in the battery modules. In addition, each pouch-type battery cell 100 may include an electrode lead 110. The electrode lead 110 includes a positive electrode lead and a negative electrode lead, and the positive electrode lead and the negative electrode lead may be provided to protrude at the same side or at different sides of the battery cell 100. In this case, when the positive electrode lead and the negative electrode lead are located at the same side, the cell may be called a unidirectional cell, and when the positive electrode lead and the negative electrode lead are located at different sides, especially at opposite sides, the cell may be called a bidirectional cell.

The module case 200 may be configured to accommodate a plurality of pouch-type battery cells 100 in an inner space thereof. That is, the module case 200 may have an empty space therein, and a plurality of battery cells 100 may be accommodated in the inner space. For example, the module case 200 may include an upper plate, a lower plate, a left plate, a right plate, a front plate and a rear plate to limit the inner space. In addition, the cell stack may be positioned in the inner space defined as above. Here, the module case 200 may be made of a metal and/or plastic material.

In addition, at least some of the various plates constituting the module case 200 may be configured in an integrated form with each other. For example, the module case 200 may be configured in a mono frame form in which an upper plate, a lower plate, a left plate and a right plate are integrated with each other. In this case, the front side and the rear side of the mono frame may have an open shape, and the front plate and the rear plate may serve as end frames and be coupled to the open portions at the front side and the rear side of the mono frame to seal the inner space of the mono frame. As another example, the module case 200 may be configured in a U-frame form in which the lower plate, the left plate and the right plate are integrated with each other. In this case, the upper plate, the front plate and the rear plate may be coupled to the upper portion, the front end and the rear end of the U-frame. Meanwhile, when each component of the module case 200 is coupled, various fastening methods such as welding or bolting may be used.

The present disclosure is not limited by a specific material or shape of the module case 200, a coupling method, or the like.

The barrier member 300 may be interposed between neighboring pouch-type battery cells 100. That is, in a state where the battery cells 100 are stacked in at least one direction, the barrier member 300 may be interposed in the stack of the battery cells 100. For example, seeing FIG. 4, in a state where the plurality of pouch-type battery cells 100 are stacked in the X-axis direction, the barrier member 300 may be inserted between neighboring battery cells 100. One or more barrier members 300 may be provided in one battery module. In particular, when three or more battery cells 100 are included, a plurality of barrier members 300 may be provided and interposed between neighboring battery cells 100, respectively.

In particular, the barrier member 300 may be interposed between the accommodation portions R of neighboring battery cells 100. That is, as described above, the accommodation portion R may be present in a central region of each pouch-type battery cell 100, and the barrier member 300 may be interposed between the accommodation portions R of the pouch-type battery cells 100 to face the accommodation portions R of the neighboring pouch-type battery cells 100.

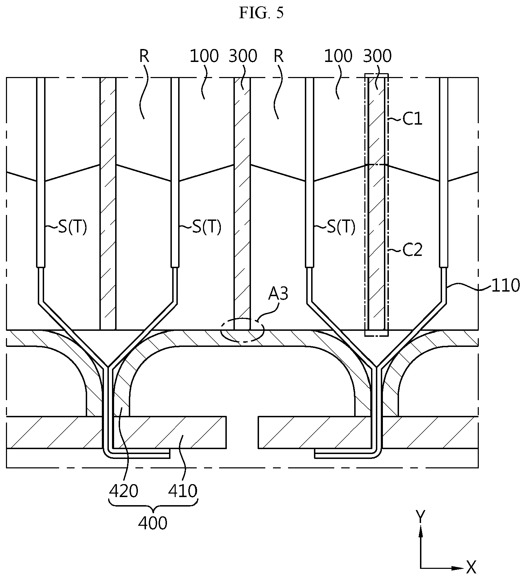

In addition, the barrier member 300 may be configured to have at least one side protrusively extending from a portion between the accommodation portions R of the neighboring pouch-type battery cells 100 to a portion between the sealing portions S of the neighboring battery cells 100. This will be described in more detail with further reference to FIG. 5.

FIG. 5 is an enlarged view showing a portion A2 of FIG. 4.

Referring to FIG. 5, the barrier member 300 may be interposed between the accommodation portions R of neighboring pouch-type battery cells 100, like a portion indicated by C1. In addition, the barrier member 300 may protrusively extend to a portion deviated from the space between the accommodation portions R of the neighboring pouch-type battery cells 100, like a portion indicated by C2.

Moreover, the protrusive extending portion C2 of the barrier member 300 may protrusively extend to a portion between the sealing portions S of the neighboring battery cells 100. That is, in the stack of the pouch-type battery cells 100, the sealing portion S of each battery cell 100 may exist as shown in FIG. 5, and the protrusive extending portion C2 of the barrier member 300 may also exist in the portion between the sealing portions S.

The barrier member 300 may be made of a material resistant to heat or flame. For example, the barrier member 300 may include a material such as heat-resistant plastic, ceramic, or metal.

According to this configuration of the present disclosure, the safety of the battery module may be further improved. More specifically, according to this embodiment, when a high-temperature venting gas or flame is ejected from a specific battery cell 100, it is possible to effectively block the influence of the venting gas or flame to other surrounding battery cells 100. In particular, the sealing portion S of the battery cell 100 is a fusion-bonded portion, and may have weak durability against a high temperature, pressure, flame, or the like, compared to the accommodation portion R of the battery cell 100. However, according to the embodiment of the present disclosure, since the sealing portion S of the battery cell 100 is protected by the protrusively extending portion of the barrier member 300, it is possible to prevent the sealing portion S from being affected by the venting gas or flame discharged from other battery cells 100. Therefore, in this case, propagation of thermal runaway between the battery cells 100 inside the battery module may be effectively prevented.

In particular, the barrier member 300 may be configured to protrusively extend toward a terrace portion of the pouch-type battery cell 100. More specifically, the pouch-type battery cell 100 may have three or four sealing portions S, and the electrode lead 110 may be provided in some of the sealing portions S. For example, in the battery cell 100 shown in FIG. 3, the sealing portion S may be formed at front, rear and upper sides of the accommodation portion R, respectively. At this time, the electrode lead 110 may be provided to the sealing portion at the front side and the sealing portion at the rear side, respectively, as indicated by T, among the three sealing portions. In addition, the sealing portions at the front side and the rear side may be referred to as the terrace portion of the battery cell 100.

The barrier member 300 may be configured to protrusively extend toward the terrace portion where the electrode lead 110 is located, among the sealing portions of the pouch-type battery cell 100, as above. In particular, referring to FIG. 5, the terrace portion may be located at the front side of each battery cell 100 as indicated by T, and the terrace portions T may be arranged to be spaced apart by a predetermined distance in the left and right direction (X-axis direction). In this case, the extending portion C2 of the barrier member 300 protruding in the front direction (-Y-axis direction) from the accommodation portion R of each battery cell 100 may be located in a separated space between neighboring terrace portions T.

According to this embodiment of the present disclosure, the terrace portions T of neighboring battery cells 100 may be blocked by the barrier member 300.

In particular, in the space where the terrace portion T is arranged inside the module case 200, a relatively larger empty space may exist, compared to other parts of the battery cell 100, particularly the space where the accommodation portion R is located. Therefore, the venting gas or flame ejected from the battery cell 100 may be easily concentrated.

In addition, among several sealing portions included in the battery cell 100, a sealing portion other than the terrace portion T may be folded. For example, in the embodiment of FIG. 3, the upper sealing portion may be accommodated inside the module case 200 in a folded state. Meanwhile, since the electrode lead 110 is located in the front sealing portion or the rear sealing portion, namely the terrace portion T, the front sealing portion or the rear sealing portion may be stored in the module case 200 as it is without being folded. Therefore, when a venting gas or flame is ejected from the inside of a specific battery cell 100, the venting gas or flame is often ejected toward the terrace portion T rather than the folded sealing portion S.

Therefore, in the pouch-type battery cell 100, the terrace portion T may be regarded as being more vulnerable to thermal chain reaction, compared to other portions. However, according to this embodiment, the terrace portions T of neighboring battery cells 100 may be blocked from each other by the barrier member 300. Therefore, even if the venting gas or flame is concentrated or ejected to the terrace portion T of a specific battery cell 100, it is possible to prevent or reduce the influence of the venting gas or flame on the terrace portion T of other neighboring battery cells 100.

In the battery module according to the present disclosure, a plurality of pouch-type battery cells 100 may be stacked in a horizontal direction (X-axis direction) in a state of standing up in a vertical direction (Z-axis direction), as shown in FIG. 2 or the like. That is, both large surfaces of each pouch-type battery cell 100 may be disposed in a horizontal direction, for example in a left and right direction, so that the accommodation portions thereof are be positioned to face each other. In addition, the rims of each pouch-type secondary battery may be disposed to face upper, lower, front and rear directions. In this case, the sealing portion S may be disposed in at least a portion of the rim of each pouch-type secondary battery.

The barrier member 300 may be configured in a plate shape, as shown in FIG. 4 or the like. In particular, the barrier member 300 may be configured in a plate shape that stands up in the vertical direction so that two wide surfaces thereof face in the horizontal direction. In addition, the barrier member 300 may be interposed between neighboring battery cells 100. Accordingly, the wide surface of the barrier member 300 may face the accommodation portion R and the sealing portion S of the battery cell 100 disposed at one side or both sides.

In this case, even if the barrier member 300 is interposed between the battery cells 100, the overall volume of the stack of the battery cell 100 or the battery module may not increase significantly. Also, in this case, most of the battery cells 100 may be easily blocked by the barrier member 300.

The battery module according to the present disclosure may further include a bus bar assembly 400 as shown in FIG. 2. The bus bar assembly 400 may be configured to connect the electrode leads 110 of the plurality of pouch-type battery cells 100 to each other. More specifically, the bus bar assembly 400 may be configured to support the electrode leads 110, facilitate interconnection of the electrode leads 110, and enable sensing of a voltage or the like from the electrode leads 110. In particular, the bus bar assembly 400 may include a module bus bar 410 and a bus bar housing 420, as shown in FIG. 2.

Here, the module bus bar 410 may be made of an electrically conductive material, for example a metal material. In addition, the module bus bar 410 may be configured to electrically connect two or more electrode leads 110 to each other or may be connected to one or more electrode leads 110 to transmit sensing information to a control unit such as a battery management system (BMS).

In addition, the bus bar housing 420 may be made of an electrically insulating material, for example a plastic material. In addition, the bus bar housing 420 may be configured such that the module bus bar 410 is seated and fixed. Moreover, the bus bar housing 420 may have a slit, as indicated by S1 in FIG. 2. In addition, the module bus bar 410 may be attached to an outer side, for example a front side, of the bus bar housing 420. In this case, the electrode lead 110 may contact the module bus bar 410 located at the outside through the slit S1 of the bus bar housing 420. In particular, the electrode lead 110 may be fixed to the module bus bar 410 alone or in a state where two or more electrode leads 110 are stacked. In this case, the coupling and fixing method between the electrode lead 110 and the module bus bar 410 may employ laser welding or ultrasonic welding, but various other fastening methods may also be applied.

According to the invention, the barrier member 300 is configured to have at least one end in contact with the bus bar assembly 400. For example, as indicated by A3 in FIG. 5, the front end of the barrier member 300 may be in direct contact with the inner (rear) surface of the bus bar assembly 400 located at the front side of the stack of the plurality of battery cells 100. In particular, the barrier member 300 may be in contact with the inner surface of the bus bar housing 420 provided in the bus bar assembly 400.

According to this embodiment of the present disclosure, by eliminating or minimizing the gap between the end of the barrier member 300 and the bus bar assembly 400, it is possible to prevent a venting gas or flame from flowing in or out through the gap. Accordingly, in this case, the gas or flame blocking performance between the battery cells 100 by the barrier member 300 may be further improved. In addition, in this case, the fixing force of the barrier member 300 may be improved through the friction force caused by the contact between the barrier member 300 and the bus bar assembly 400. Accordingly, it is possible to prevent the barrier member 300 from moving due to an external impact or internal pressure.

Meanwhile, the barrier member 300 may protrusively extend to the outer side (front and rear sides) beyond the sealing portion S of the pouch-type battery cell 100 in the front and rear direction (Y-axis direction). In this case, the length of the barrier member 300 in the front and rear direction may be equal to or larger than the length of each pouch-type battery cell 100 in the front and rear direction. In addition, the barrier member 300 may be formed to be equal to or longer than the length of the pouch-type battery cell 100 in the upper and lower direction. In this case, the upper end and the lower end of the barrier member 300 may be in contact with the inner surface of the module case 200, respectively. In this case, the gas or flame blocking performance, the fixing force, and the like may be stably secured not only at the front and rear ends of the barrier member 300, but also at the upper and lower ends of the barrier member 300.

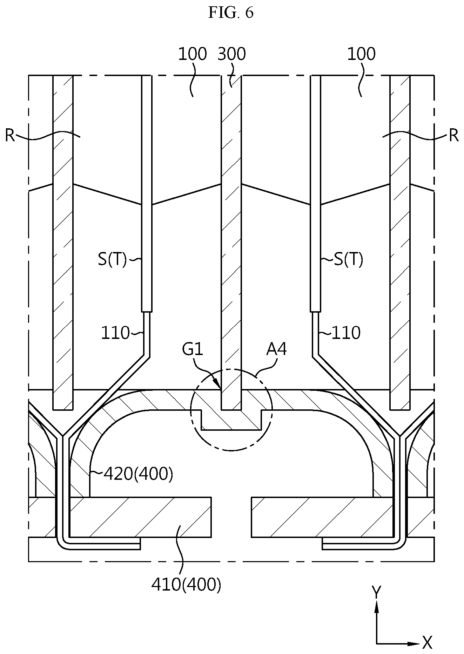

FIG. 6 is a cross-sectional view schematically showing some components of a battery module according to another embodiment of the present disclosure. In each embodiment of the present disclosure, including this embodiment, a feature different from that of other embodiments will be described in detail, and a feature identic or similar to that of other embodiments will not be described in detail.

Referring to FIG. 6, the barrier member 300 may be configured to have at least one end inserted into the inner surface of the bus bar assembly 400, as indicated by A4. In this case, the bus bar assembly 400, particularly the bus bar housing 420, may have a groove formed concavely in the outer direction so that one end of the barrier member 300 may be inserted therein. For example, as shown in FIG. 6, the bus bar housing 420 located at the front side of the battery cell 100 may have an insert groove G1 concavely formed in the outer direction (-Y-axis direction) at the inner surface. In addition, the front end of the barrier member 300 may be inserted into the insert groove G1 of the bus bar housing 420. Here, the bus bar housing 420 may be configured such that a specific part is bent, as shown in FIG. 6, to form the insert groove G1. Alternatively, the bus bar housing 420 may be configured such that a specific portion is formed to have a reduced thickness, namely in a dug shape, to form the insert groove G1.

According to this embodiment of the present disclosure, the fixing force of the barrier member 300 may be further improved. In particular, when a venting gas is generated from a specific battery cell 100, the internal pressure around the corresponding battery cell 100 may increase to pressurize the barrier member 300 in the left and right direction (X-axis direction). However, in this embodiment, since the end of the barrier member 300 is inserted into the insert groove G1 of the bus bar housing 420, the movement of the barrier member 300 in the left and right direction may be suppressed. In addition, in this embodiment, the sealing force between the end of the barrier member 300 and the bus bar assembly 400 may be secured stably. Therefore, according to this embodiment, the heat/flame propagation prevention performance between the cells by the barrier member 300 may be further improved, and the arrangement state of the battery cells 100 and the barrier member 300 may be stably maintained.

Moreover, in this embodiment, an adhesive may be filled in the insert groove G1 of the bus bar housing 420 into which the end of the barrier member 300 is inserted. In this case, the fixing force and the sealing force to the end of the barrier member 300 may be further improved by the adhesive.

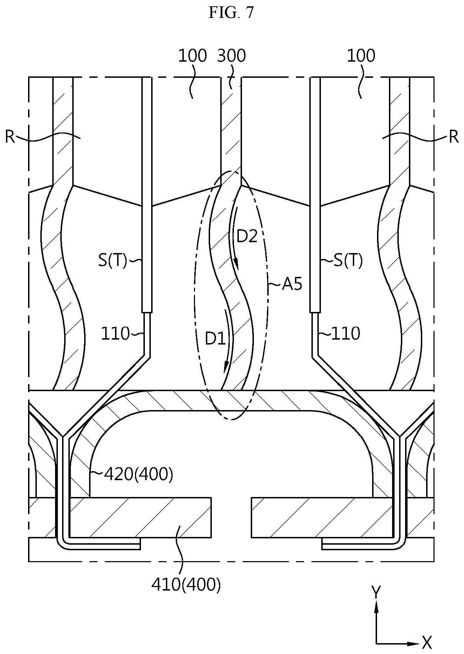

FIG. 7 is a cross-sectional view schematically showing some components of a battery module according to still another embodiment of the present disclosure.

Referring to FIG. 7, the barrier member 300 may be configured such that at least a part of the portion protrusively extending between the sealing portions of the neighboring battery cells 100 is curved. For example, as indicated by A5 in FIG. 7, the front end of the barrier member 300 may protrusively extend in the front direction (-Y-axis direction) between the sealing portions S, especially the terrace portions T, of neighboring battery cells 100. In addition, the protrusively extending portion of the barrier member 300 may be configured in a zigzag shape such that an uneven portion is formed in the left and right direction (X-axis direction), namely in the horizontal direction.

According to this embodiment of the present disclosure, the venting gas or flame ejected from the battery cell 100 may be directed toward the central portion of the battery cell 100, rather than toward other surrounding battery cells 100. For example, when the venting gas is discharged from the left battery cell 100 in the embodiment of FIG. 7, the venting gas may flow in the left direction as indicated by the arrow D1 due to the curved shape of the left surface at the front end of the barrier member 300. In addition, when the venting gas is discharged from the right battery cell 100 in the embodiment of FIG. 7, the venting gas may flow in the right direction as indicated by the arrow D2 due to the curved shape of the right surface at the front end of the barrier member 300. Therefore, in this case, since the gas or flame discharged from the surrounding battery cell 100 is directed in a direction away from other neighboring battery cells 100, the influence of the gas or flame on other battery cells 100 may be reduced.

In this embodiment, the front end and/or the rear end of the barrier member 300 interposed between the sealing portions S of the battery cells 100 may be configured in a bent plate shape to implement a curved shape. In addition, the central portion of the barrier member 300 interposed between the accommodation portions R of the battery cells 100 may have a flat plate shape. In this case, the barrier member 300 may be regarded as having a plate shape including a flat plate portion and a bent portion.

According to this embodiment, by applying a curved shape to one or both ends of the plate-shaped member, the portion protrusively extending between the sealing portions may be more easily implemented to configure in a curved shape. In addition, according to this embodiment, by using one bent portion, the curved shape may face all of the sealing portions S of two neighboring battery cells 100. For example, in the embodiment of FIG. 7, by forming the front end of one barrier member 300 to be bent in the left and right direction, both the sealing portion S of the left battery cell 100 and the sealing portion S of the right battery cell 100 may face the bent shape.

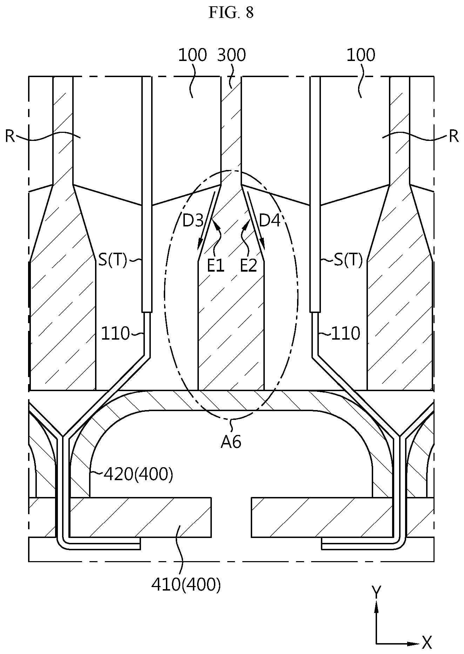

FIG. 8 is a cross-sectional view schematically showing some components of a battery module according to still another embodiment of the present disclosure.

Referring to FIG. 8, the barrier member 300 may be partially formed to have a different thickness. In particular, the barrier member 300 may have different thicknesses between a portion interposed between the accommodation portions of the battery cells 100 and a portion interposed between the sealing portions of the battery cells 100.

More specifically, as indicated by A6 in FIG. 8, a protruding end of the barrier member 300 interposed between the sealing portions S may have a portion formed thicker than the other portion, for example the portion interposed between the accommodation portions R of the battery cells 100.

According to this embodiment of the present disclosure, since the portion of the barrier member 300 interposed between the sealing portions, particularly the portion interposed between the terrace portions T, is formed thicker, the effect of protecting the terrace portion T according to the barrier member 300 may be further improved. That is, according to this embodiment, since the barrier member 300 is thickly formed between the terrace portions T, it is possible to further suppress the influence of the venting gas or flame on the terrace portions T of other neighboring battery cells 100. Moreover, since a relatively large empty space is formed between the terrace portions T of the battery cells 100, even if the end of the barrier member 300 is configured to be thick as in this embodiment, the volume of the battery module may not be increased. In addition, according to this embodiment, the mechanical strength or durability of the barrier member 300 may be further improved. Accordingly, it is possible to prevent the barrier member 300 from being broken or damaged by a venting gas or a flame.

In addition, the barrier member 300 may have an inclined surface formed in the portion located between the sealing portions S, as indicated by E1 and E2 in FIG. 8. In particular, the inclined surface E1, E2 may be configured in a shape that becomes closer to the sealing portion in the outer direction (forward). For example, on the left surface of the protrusive extending portion of the barrier member 300, an inclined surface may be formed in a shape that becomes closer to the terrace portion T of the left battery cell 100 in the front direction, as indicated by E1. In addition, on the right surface of the protrusive extending portion of the barrier member 300, an inclined surface may be formed in a shape that becomes closer to the terrace portion T of the right battery cell 100 in the front direction, as indicated by E2.

According to this embodiment of the present disclosure, when a venting gas or flame is generated, it is possible to more effectively suppress the gas or flame from going toward neighboring battery cells 100. For example, when a flame occurs in the left battery cell 100 in the embodiment of FIG. 8, while the flame is moving forward along the left inclined surface E1 of the barrier member 300, the flame may become far from the terrace portion T of the right battery cell 100 as indicated by the arrow D3. Conversely, when a flame is generated in the right battery cell 100 in the embodiment of FIG. 8, while the flame is moving forward along the right inclined surface E2 of the barrier member 300, the flame may become far from the terrace portion T of the left battery cell 100, as indicated by the arrow D4. Therefore, in this case, problems such as thermal runaway propagation between the battery cells 100 may be more reliably prevented.

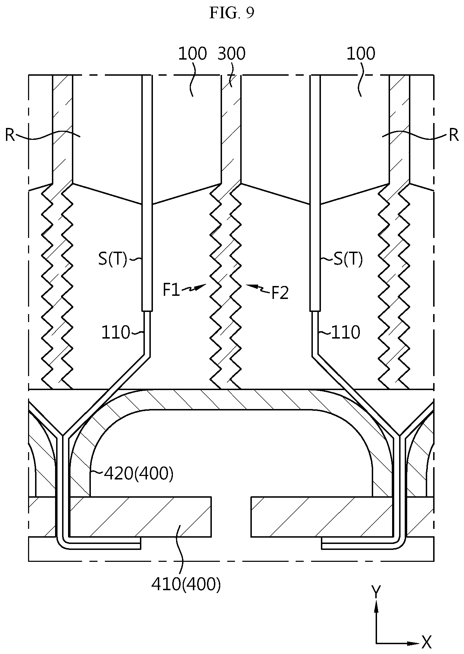

FIG. 9 is a cross-sectional view schematically showing some components of a battery module according to still another embodiment of the present disclosure.

Referring to FIG. 9, the barrier member 300 may have an uneven portion as indicated by F1 and F2, formed on the surface of the protrusively extending portion between the sealing portions of neighboring battery cells 100. Moreover, a concave portion or a convex portion may be formed in the uneven portion. For example, the uneven portion as indicated by F1 may be formed on the left surface of the protrusive extending portion of the barrier member 300 to face the sealing portion S of the left battery cell 100, particularly the terrace portion T. In addition, the uneven portion as indicated by F2 may be formed on the right surface of the protrusive extending portion of the barrier member 300 to face the sealing portion S of the right battery cell 100, particularly the terrace portion T.

According to this embodiment of the present disclosure, when a venting gas or flame is generated, it is possible to suppress external emission of sparks or high-temperature active material particles, flames, or the like contained in the venting gas. Moreover, it is possible to suppress external emission of the active material particles and the like since their movement is blocked due to the frictional force of the uneven portions F1 and F2. In addition, the sparks or high-temperature active material particles may be inserted or collected in the concave portions formed in the uneven portions F1 and F2 of the barrier member 300. In addition, the linear movement of the sparks or flames may be restricted by the concave portions or the convex portions formed in uneven portions F1 and F2 of the barrier member 300. Therefore, in this case, it is possible to block that active material particles or sparks are emitted to the outside and act as an ignition source at the outside of the battery module or in other battery cells 100.

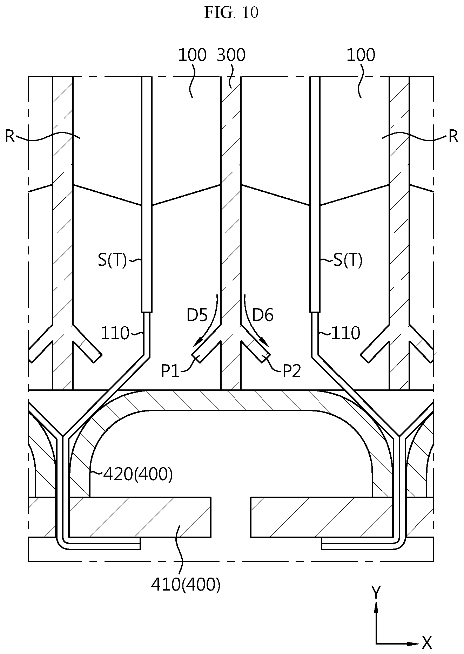

FIG. 10 is a cross-sectional view schematically showing some components of a battery module according to still another embodiment of the present disclosure.

Referring to FIG. 10, the barrier member 300 may have protrusions, as indicated by P1 and P2, on the surface of the portion protrusively extending between the sealing portions of neighboring battery cells 100. For example, a protrusion formed to protrude in the left direction as indicated by P1 may be formed on the left surface of the protrusive extending portion of the barrier member 300. In addition, a protrusion formed to protrude in the right direction as indicated by P2 may be formed on the right surface of the protrusive extending portion of the barrier member 300.

Moreover, the protrusions P1 and P2 may be configured to be inclined at a predetermined angle with respect to a direction parallel to the stacking direction of the battery cells 100. In particular, the protrusions P1 and P2 may be configured to be inclined to become away from the battery cell 100 toward the end thereof. For example, the protrusion P1 formed on the left surface of the barrier member 300 may be inclined in the front direction (-Y-axis direction) toward the left. In addition, the protrusion P2 formed on the right surface of the barrier member 300 may be inclined in the front direction (-Y-axis direction) toward the right.

According to this embodiment of the present disclosure, it is possible to suppress the venting gas or flame discharged from the battery cell 100 from being directed toward the terrace portions of other neighboring battery cells 100. For example, in the embodiment of FIG. 10, if the venting gas is discharged from the left battery cell 100, when the venting gas is discharged in the front direction from the terrace portion S at the front side of the left battery cell 100, the flame may gradually move away from the terrace portion T of the right battery cell 100 due to the shape of the left protrusion P1, as indicated by the arrow D5. Conversely, in the embodiment of FIG. 10, when the venting gas is discharged from the right battery cell 100, the venting gas may be discharged away from the terrace portion T of the left battery cell 100 due to the right protrusion P2, as indicated by the arrow D6. Therefore, in this case, the influence of the gas discharged from each battery cell 100 on the terrace portion of the other battery cell 100 may be more reliably blocked.

Meanwhile, in the embodiment of FIG. 10, the configuration in which the protrusions P1 and P2 are formed in a straight line is shown, but the protrusions P1 and P2 may be formed in a curved shape. That is, the protrusions P1 and P2 may have an inclined surface in the form of a curved surface rather than a flat surface.

The barrier member 300 may include at least one material selected from GFRP (Glass Fiber Reinforced Plastic) and CFRP (Carbon Fiber Reinforced Plastic).

For example, the barrier member 300 may be made of a GFRP material or a CFRP material. In this case, the barrier member 300 may be entirely made of the GFRP or CFRP material. According to this embodiment, the barrier member 300 may be easily manufactured.

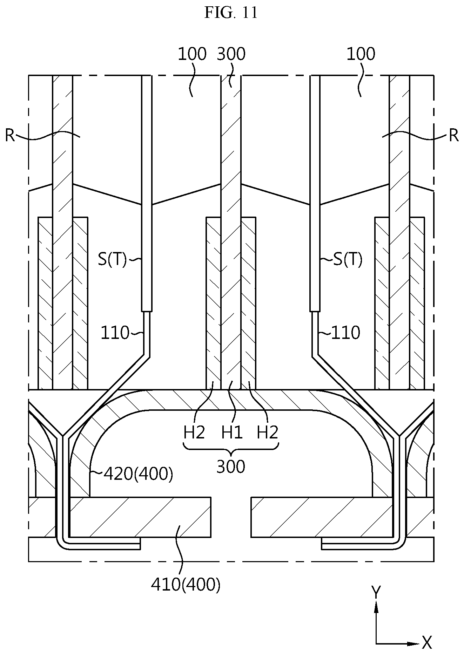

Alternatively, the barrier member 300 may include a metal, ceramic, or other plastic materials, together with the GFRP or CFRP material. This will be described in more detail with reference to FIG. 11.

FIG. 11 is a cross-sectional view schematically showing some components of a battery module according to still another embodiment of the present disclosure.

Referring to FIG. 11, the barrier member 300 may include a body portion as indicated by H1 and a reinforcing portion as indicated by H2. Here, the body portion H1 may have a plate shape and be interposed between the accommodation portions R of the battery cells 100 and between the terrace portions T of the battery cells 100. In addition, the reinforcing portion H2 may be configured be added on the end, for example the front end, of the body portion H1. That is, the reinforcing portion H2 may be attached to the left surface and the right surface at the front end of the body portion H1, respectively.

In this configuration, the body portion H1 and the reinforcing portion H2 may be made of different materials. For example, the body portion H1 may be made of a material such as metal, ceramic, plastic or silicon. In addition, the reinforcing portion H2 may be made of a material that is more resistant to heat or flame than the body portion H1, particularly a GFRP or CFRP material. The reinforcing portion H2 may be attached to the surface of the body portion H1 in a coated form.

According to this embodiment of the present disclosure, since an expensive GFRP or CFRP material is provided only to the terrace portion, it is possible to increase the economic feasibility of the battery module and stably secure the flame blocking performance at the terrace portion T. Also, according to this embodiment, in the barrier member 300, the thickness of the portion positioned between the terrace portions T of the battery cells 100 may be increased. Accordingly, it is possible to prevent the end of the barrier member 300 where stress caused by the venting gas may be concentrated from being damaged or broken, and it is also possible to improve the heat/flame blocking stability of the terrace portion T.

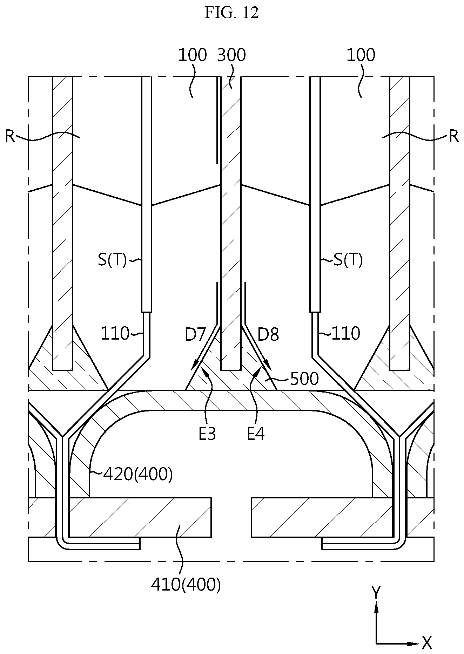

FIG. 12 is a cross-sectional view schematically showing some components of a battery module according to still another embodiment of the present disclosure.

Referring to FIG. 12, the battery module according to the present disclosure may further include a sealing member 500. The sealing member 500 may be positioned at the end of the barrier member 300 to surround the end of the barrier member 300. For example, the sealing member 500 may be positioned at the front side and the rear side of the barrier member 300 and configured to surround the front end and the rear end of the barrier member 300.

In particular, the sealing member 500 may be interposed between the end of the barrier member 300 and the inner surface of the bus bar assembly 400 to seal the space therebetween. The sealing member may be made of a material having a higher elasticity than the barrier member 300. For example, the sealing member may be made of a material such as rubber, silicone, plastic, metal, CFRP or GFRP having excellent heat resistance.

According to this embodiment, the sealing force between the barrier member 300 and the bus bar housing 420 may be further improved, thereby more stably securing the heat/flame blocking performance by the barrier member 300.

In particular, the sealing member 500 may have a fitting groove so that the end of the barrier member 300 is fitted thereto. In addition, when a plurality of barrier members 300 are included, the sealing member 500 may be provided at the end of each barrier member 300. In addition, the sealing member 500 may be provided at the front edge and/or the rear edge of each barrier member 300.

In addition, the sealing member 500 may be provided to be elongated from the edge of each barrier member 300. For example, the sealing member 500 may be formed to be elongated in the upper and lower directions at the front edge and the rear edge of each barrier member 300.

In addition, the sealing member 500 may have an inclined surface, as indicated by E3 and E4 in FIG. 12. In particular, the inclined surfaces E3 and E4 may be configured to become closer to the sealing portion of the battery cell 100 in the outer direction (front direction). For example, in the embodiment of FIG. 12, the left inclined surface E3 of the sealing member 500 may be inclined to become closer to the terrace portion T of the left battery cell 100 in the front direction (-Y-axis direction). In addition, in the embodiment of FIG. 12, the right inclined surface E4 of the sealing member 500 may be inclined to become closer to the terrace portion T of the right battery cell 100 in the front direction (-Y-axis direction).

According to this embodiment of the present disclosure, it is possible to suppress that the venting gas or flame discharged from the battery cell 100 is directed toward the terrace portions of other neighboring battery cells 100. For example, in the embodiment of FIG. 12, when the flame is discharged from the left battery cell 100, at the front left side of the barrier member 300, the flame may be discharged to be gradually inclined to the left in the front direction, as indicated by the arrow D7. Accordingly, the flame discharged from the left battery cell 100 may gradually move away from the terrace portion T of the right battery cell 100. In addition, in the embodiment of FIG. 12, when the flame is discharged from the right battery cell 100, at the front right side of the barrier member 300, the flame may be discharged to be gradually inclined to the right in the front direction, as indicated by the arrow D8. Accordingly, the flame discharged from the right battery cell 100 may gradually move away from the terrace portion T of the left battery cell 100. Therefore, in this case, propagation of thermal runaway, flames, or the like as well as fire spreading between the battery cells 100 may be prevented more effectively.

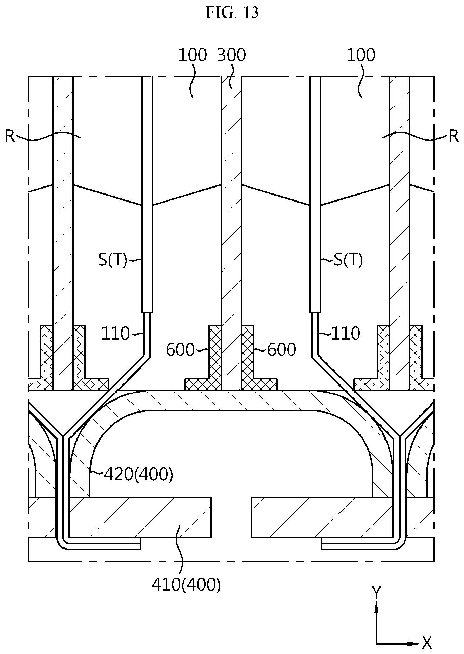

FIG. 13 is a cross-sectional view schematically showing some components of a battery module according to still another embodiment of the present disclosure.

Referring to FIG. 13, the battery module according to the present disclosure may further include a mesh member 600. The mesh member 600 may be positioned at a coupling portion joint between the barrier member 300 and the bus bar assembly 400. In particular, the mesh member 600 may be in contact with the portion between the end of the barrier member 300 and the inner surface of the bus bar housing 420. At this time, the mesh member 600 may be adhesively fixed to the barrier member 300 and the bus bar housing 420, respectively.

For example, the mesh members 600 may be attached to the left surface and the right surface at the front end of the barrier member 300, respectively. In addition, a portion of each of the mesh members 600 not attached to the barrier member 300 may be attached to the bus bar housing 420.

According to this embodiment of the present disclosure, the performance of suppressing the emission of sparks, active material particles, or the like may be further improved. In particular, when the active material particles, sparks, flames, or the like flow along the surface of the mesh member 600, the movement may be suppressed by the uneven structure formed in the mesh member 600. In addition, according to this embodiment, since the venting gas and the like must pass through the mesh member 600 in order to move to the coupling portion between the end of the barrier member 300 and the bus bar housing 420, the active material particles or the like included in the venting gas may be filtered by the mesh member 600. In addition, according to this embodiment, since the barrier member 300 and the bus bar housing 420 are coupled and fixed by the mesh member 600, the position of the barrier member 300 may be stably maintained. In addition, in this embodiment, the durability or mechanical rigidity of the end of the barrier member 300 may be improved by the mesh member 600.

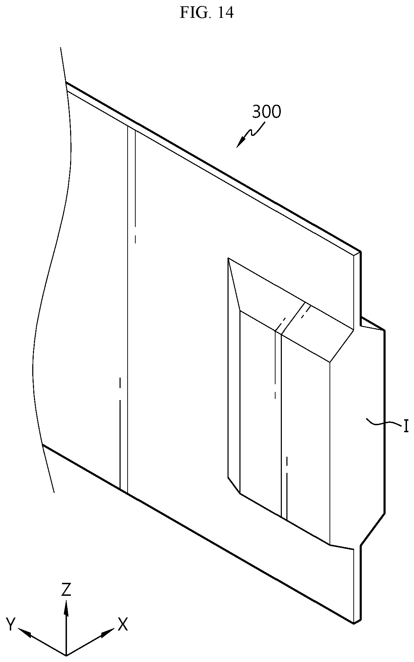

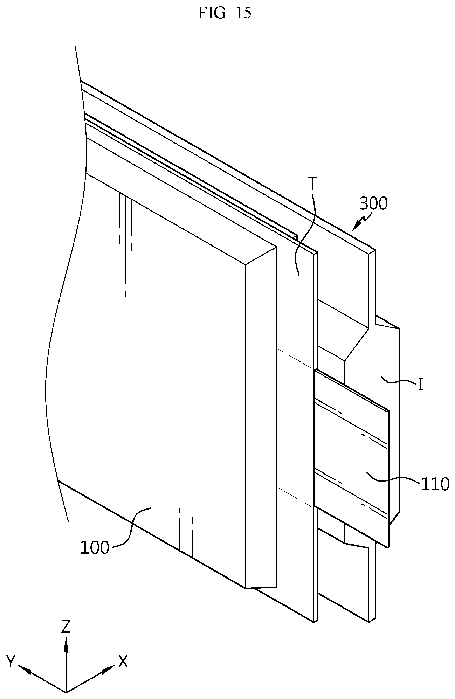

FIG. 14 is a perspective view schematically showing a barrier member included in a battery module according to still another embodiment of the present disclosure. FIG. 15 is a diagram showing that the barrier member and the battery cell of FIG. 14 are disposed adjacently.

Referring to FIGS. 14 and 15, the end the barrier member 300 interposed between the terrace portions T may have different thicknesses in the upper and lower direction. In particular, the barrier member 300 may be configured such that, in the portion interposed between the terrace portions T of the battery cells 100, a central portion in the upper and lower direction has a greater thickness than upper and lower portions thereof. For example, as shown in FIGS. 14 and 15, the central portion as indicated by I at the front end of the barrier member 300 may be formed to have a greater thickness than the upper end and the lower end thereof. In particular, the portion formed thickly at the end of the barrier member 300 as described above may be a portion facing the electrode lead 110. That is, the barrier member 300 may be formed so that a portion facing the electrode lead 110 has a greater thickness than other portions.

According to this embodiment of the present disclosure, it is possible to more reliably prevent the gas or flame discharged from a specific battery cell 100 from raising the temperature of the electrode leads 110 of other battery cells 100 located beyond the barrier member 300. Also, according to this embodiment, the thick portion I formed in the barrier member 300 may support the electrode lead 110 and suppress the movement of the electrode lead 110 in the left and right direction caused by an external shock or gas pressure. Accordingly, it is possible to more effectively prevent the electrode lead 110 from being damaged or broken. In addition, according to this embodiment, when a venting gas or flame is generated from a specific battery cell 100, the venting gas or flame may not flow toward the electrode lead 110 but flow toward the upper or lower side thereof. Accordingly, it is possible to prevent the electrode lead 110 from being damaged by the venting gas, flame, or the like.

A battery pack according to the present disclosure may include one or more battery modules according to the present disclosure described above. In addition, the battery pack according to the present disclosure may further include various other components other than the battery module, for example components of the battery pack known at the time of filing of this application, such as a BMS, a bus bar, a pack case, a relay, a current sensor, and the like.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include other various components included in a vehicle, in addition to the battery module or the battery pack. For example, the vehicle according to the present disclosure may further include a vehicle body, a motor, and a control device such as an electronic control unit (ECU), in addition to the battery module according to the present disclosure.

In addition, the battery module according to the present disclosure may be applied to an energy storage system (ESS). That is, the energy storage system according to the present disclosure may include the battery module according to the present disclosure or the battery pack according to the present disclosure.

Meanwhile, in this specification, terms indicating directions such as "upper", "lower", "left", "right", "front", and "rear" are used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only, since various changes and modifications will become apparent to those skilled in the art from this detailed description.

### Reference Signs

100: battery cell
110: electrode lead
200: module case
300: barrier member
400: bus bar assembly
410: module bus bar, 420: bus bar housing
500: sealing member
600: mesh member
R: accommodation portion, S: sealing portion, T: terrace portion

## Claims

1. A battery module, comprising:
a plurality of pouch-type battery cells (100) respectively having an accommodation portion (R) and a sealing portion (S) and configured to be stacked on each other;
a module case (200) configured to accommodate the plurality of pouch-type battery cells (100) in an inner space thereof;
a barrier member (300) interposed between the accommodation portions (R) of neighboring pouch-type battery cells (100) and configured to have at least one side protrusively extending from a portion (C1) between the accommodation portions (R) of the neighboring pouch-type battery cells (100) to a portion (C2) between the sealing portions (S) of the neighboring pouch-type battery cells (100); and
a bus bar assembly (400, 410, 420) configured to connect electrode leads (110) of the plurality of pouch-type battery cells (100) to each other,
**characterized in that** the barrier member (300) has at least one end in contact with the bus bar assembly (400, 410, 420).

2. The battery module according to claim 1,
wherein the barrier member (300) is configured to protrusively extend toward a terrace portion (T) at a front or rear side of the pouch-type battery cell (100) where an electrode lead (110) is located among the sealing portion (S) of the pouch-type battery cell (100).

3. The battery module according to claim 1,
wherein the plurality of pouch-type battery cells (100) are stacked in a horizontal direction (X) in a state of standing up in a vertical direction (Z), and
the barrier member (300) is configured in a plate shape standing up in the vertical direction (Z) and interposed between the neighboring pouch-type battery cells (100).

4. The battery module according to claim 1,
wherein the barrier member (300) is configured to have at least one end inserted into an inner surface of the bus bar assembly (400, 410, 420).

5. The battery module according to claim 1,
wherein the barrier member (300) is configured such that at least a part of the portion (C2) protrusively extending between the sealing portions (S) of the neighboring pouch-type battery cells (100) is curved.

6. The battery module according to claim 1,
wherein the barrier member (300) is configured such that the portion (C1) interposed between the accommodation portions (R) of the battery cells (100) and the portion (C2) interposed between the sealing portions (S) of the battery cells (100) are formed to have different thicknesses.

7. The battery module according to claim 1,
wherein the barrier member (300) includes at least one material selected from GFRP (Glass Fiber Reinforced Plastic) and CFRP (Carbon Fiber Reinforced Plastic).

8. The battery module according to claim 1, further comprising:
a sealing member (500) configured to surround an end of the barrier member (300).

9. A battery pack, comprising the battery module according to any one of claims 1 to 8.

10. A vehicle, comprising the battery module according to any one of claims 1 to 8.

## Patentansprüche

1. Batteriemodul aufweisend:
mehrere pouch-förmige Batteriezellen (100), die jeweils einen Aufnahmeabschnitt (R) und einen Dichtungsabschnitt (S) aufweisen und konfiguriert sind, aufeinander gestapelt zu werden;
ein Modulgehäuse (200), das konfiguriert ist, die mehreren pouch-förmigen Batteriezellen (100) in einem Innenraum von ihm aufzunehmen;
ein Barriereelement (300), das zwischen den Aufnahmeabschnitten (R) von benachbarten pouch-förmigen Batteriezellen (100) angeordnet ist und konfiguriert ist, zumindest eine Seite aufzuweisen, die sich vorstehend von einem Abschnitt (C1) zwischen den Aufnahmeabschnitten (R) der benachbarten pouch-förmigen Batteriezellen (100) zu einem Abschnitt (C2) zwischen den Dichtungsabschnitten (S) der benachbarten pouch-förmigen Batteriezellen (100) erstreckt; und
eine Sammelschienenanordnung (400, 410, 420), die konfiguriert ist, Elektrodenleitungen (110) der mehreren pouch-förmigen Batteriezellen (100) miteinander zu verbinden,
**dadurch gekennzeichnet, dass** das Barriereelement (300) zumindest ein Ende aufweist, das in Kontakt mit der Sammelschienenanordnung (400, 410, 420) steht.

2. Batteriemodul nach Anspruch 1,
wobei das Barriereelement (300) konfiguriert ist, sich vorstehend zu einem Terrassenabschnitt (T) an einer Vorder- oder Rückseite der pouch-förmigen Batteriezelle (100) zu erstrecken, wo sich eine Elektrodenleitung (110) zwischen dem Dichtungsabschnitt (S) der pouch-förmigen Batteriezelle (100) befindet.

3. Batteriemodul nach Anspruch 1,
wobei die mehreren pouch-förmigen Batteriezellen (100) in einer horizontalen Richtung (X) in einem in einer vertikalen Richtung (Z) aufgerichteten Zustand gestapelt sind, und
das Barriereelement (300) in einer Plattenform konfiguriert ist, die in der vertikalen Richtung (Z) aufgerichtet und zwischen den benachbarten pouch-förmigen Batteriezellen (100) angeordnet ist.

4. Batteriemodul nach Anspruch 1,
wobei das Barriereelement (300) konfiguriert ist, zumindest ein Ende aufzuweisen, das in eine innere Oberfläche der Sammelschienenanordnung (400, 410, 420) eingesetzt ist.

5. Batteriemodul nach Anspruch 1,
wobei das Barriereelement (300) derart konfiguriert ist, dass zumindest ein Teil des Abschnitts (C2), der sich vorstehend zwischen den Dichtungsabschnitten (S) der benachbarten pouch-förmigen Batteriezellen (100) erstreckt, gekrümmt ist.

6. Batteriemodul nach Anspruch 1,
wobei das Barriereelement (300) derart konfiguriert ist, dass der Abschnitt (C1), der zwischen den Aufnahmeabschnitten (R) der Batteriezellen (100) angeordnet ist, und der Abschnitt (C2), der zwischen den Dichtungsabschnitten (S) der Batteriezellen (100) angeordnet ist, ausgebildet sind, unterschiedliche Dicken aufzuweisen.

7. Batteriemodul nach Anspruch 1,
wobei das Barriereelement (300) zumindest ein Material aufweist, das aus GFRP (glasfaserverstärktem Kunststoff) und CFRP (kohlefaserverstärktem Kunststoff) ausgewählt ist.

8. Batteriemodul nach Anspruch 1, ferner aufweisend:
ein Dichtungselement (500), das konfiguriert ist, ein Ende des Barriereelements (300) zu umgeben.

9. Batteriepack aufweisend das Batteriemodul nach einem der Ansprüche 1 bis 8.

10. Fahrzeug aufweisend das Batteriemodul nach einem der Ansprüche 1 bis 8.

## Revendications

1. Module de batterie, comprenant :
une pluralité de cellules de batterie du type à poche (100) dotées respectivement d'une partie d'hébergement (R) et d'une partie de scellement (S), et configurées pour être empilées les unes sur les autres ;
un boîtier de module (200) configuré pour accueillir la pluralité de cellules de batterie du type à poche (100) dans un espace intérieur de celui-ci ;
un élément barrière (300) intercalé entre les parties d'hébergement (R) des cellules de batterie du type à poche (100) voisines, et configuré pour posséder au moins un côté faisant saillie d'une partie (C1) entre les parties d'hébergement (R) des cellules de batterie du type à poche (100) voisines et une partie (C2) entre les parties de scellement (S) des cellules de batterie du type à poche (100) voisines ; et
un ensemble de barre omnibus (400, 410, 420) configuré pour connecter entre eux des conducteurs d'électrodes (110) de la pluralité de cellules de batterie du type à poche (100),
**caractérisé en ce qu'**au moins un bout de l'élément barrière (300) se trouve au contact de l'ensemble de barre omnibus (400, 410, 420).

2. Module de batterie selon la revendication 1,
l'élément barrière (300) étant configuré pour s'étendre, de façon saillante, vers une partie en palier (T) sur un côté antérieur ou postérieur de la cellule de batterie du type à poche (100) lorsqu'un conducteur d'électrode (110) est situé parmi les parties de scellement (S) de la cellule de batterie du type à poche (100).

3. Module de batterie selon la revendication 1,
la pluralité de cellules de batterie du type à poche (100) étant empilées dans le sens horizontal (X), dans un état où elles se trouvent debout dans le sens vertical (Z), et
l'élément barrière (300) étant configuré en forme de plaque, debout dans le sens vertical (Z), et intercalé entre les cellules de batterie du type à poche (100) voisines.

4. Module de batterie selon la revendication 1,
l'élément barrière (300) étant configuré de sorte qu'au moins un bout soit inséré dans une surface intérieure de l'ensemble de barre omnibus (400, 410, 420).

5. Module de batterie selon la revendication 1,
l'élément barrière (300) étant configuré de sorte qu'au moins un élément de la partie (C2) s'étendant, de façon saillante, entre les parties de scellement (S) des cellules de batterie du type à poche (100) voisines soit courbe.

6. Module de batterie selon la revendication 1,
l'élément barrière (300) étant configuré de sorte que la partie (C1) intercalée entre les parties d'hébergement (R) des cellules de batterie (100) et la partie (C2) intercalée entre les parties de scellement (S) des cellules de batterie (100) soient réalisées avec différentes épaisseurs.

7. Module de batterie selon la revendication 1,
l'élément barrière (300) comprenant au moins un matériau sélectionné entre la matière plastique renforcée de fibre de verre (PRFV) et la matière plastique renforcée de fibre de carbone (PRFC).

8. Module de batterie selon la revendication 1, comprenant en outre :
un élément d'étanchéité (500) configuré pour entourer un bout de l'élément barrière (300).

9. Bloc-batterie comprenant le module de batterie selon une quelconque des revendications 1 à 8.

10. Véhicule comprenant le module de batterie selon une quelconque des revendications 1 à 8.
